# EUROPEAN PATENT SPECIFICATION

(11) **EP 2 664 484 B1**
(45) Date of publication and mention of the grant of the patent: **08.08.2018**
(21) Application number: 13153165.9
(22) Date of filing: 30.01.2013
(51) Int. Cl.: B60L 11/18

(54) **Traveling range calculation apparatus, method and program**
Vorrichtung zur Berechnung der Reichweite, Verfahren und Programm
Appareil de calcul de plage de déplacement, procédé et programme

(30) Priority: 08.03.2012 JP 2012051681
(43) Date of publication of application: 20.11.2013
(73) Proprietor: HITACHI, LTD., Chiyoda-ku Tokyo 100-8280 (JP)
(72) Inventor: Kobayashi, Yuichi, Tokyo, 100-8220 (JP); Shirai, Keisuke, Tokyo, 100-8220 (JP); Kashiyama, Masamori, Tokyo, 100-8220 (JP); Osafune, Tatsuaki, Tokyo, 100-8220 (JP); Nishiyama, Kazuhide, Tokyo, 100-8220 (JP)
(74) Representative: MERH-IP Matias Erny Reichl Hoffmann Patentanwälte PartG mbB

(56) References cited:
- WO-A1-2011/092729
- JP-A- H10 170 293
- US-A- 5 790 976
- US-A1- 2010 106 401
- US-A1- 2010 138 098
- US-A1- 2011 202 221

## Description

### BACKGROUND

The disclosed subject matter relates to technology for calculating a range of a vehicle that travels by using stored energy.

Electric-powered vehicles (also called moving vehicles) that travel by using power stored in onboard batteries, such as electric cars and two-wheeled electric vehicles, are attracting attention. However, since battery capacity is limited, there are limitations on the range an electric-powered vehicle can achieve without recharging (referred to hereinbelow as "traveling range"). Thus, technology for calculating the traveling range of an electric-powered vehicle and displaying the results thereof on a map is needed.

In particular, in the initial phase of electric vehicle marketing, in general, it is being said that the distance that an electric vehicle is capable of traveling from a state in which the battery has been charged to the maximum capacity is shorter than the distance that a gasoline-powered vehicle is capable of traveling from a state in which the gas tank has been filled to maximum capacity. Furthermore, charging facilities have not been installed as many as gasoline stations, and in addition, it is assumed that charging an electric vehicle takes longer time than fueling a gasoline-powered vehicle. Thus, for early electric vehicles, it is strongly needed to inform the driver of the traveling range as accurately as possible.

In this regard, a technology, which acquires various types of information, such as a remaining battery amount, information on shape and gradient of roads around the vehicle, traffic information, and learned information calculated from previous data, and which, based on the acquired information, calculates the traveling range in accordance with the current remaining battery amount and displays the calculated traveling range on a liquid crystal display, is disclosed in paragraphs 0056 and 0065 of Japanese Patent Application Laid-open No. 2009-025128 (referred to as Patent Literature 1). An operation that takes individual roads into account like this makes it possible to inform a driver of a traveling range with high precision.

### SUMMARY

As mentioned above, charging an electric vehicle takes longer time than fueling a gasoline-powered vehicle. Thus, it is said that the case of charging an electric vehicle at home and traveling from home to home without charged outside will be more often than the case of charging the vehicle outside before returning home as a use aspect of electric vehicle. Thus, it is estimated that informing a driver a round-trip traveling range without charging along the way will be needed. However, a specific technology for accurately calculating a round-trip traveling range without charging along the way is not disclosed in the Patent Literature 1.

A technology is provided that allows accurate calculation of a traveling range within which it is possible to return to a point of departure without replenishing energy along the way.

According to an example, a traveling range calculation apparatus is for computing a range of a vehicle that travels by using stored energy, and comprises a storage part, which stores beforehand as an energy consumption graph an amount of energy consumed by a vehicle traveling in both directions along road links on a map rendered in a manner that road links couple road nodes, and a processing part, which traces a road link from a specified start point location peripherally, calculates, for each road node, a first integration value obtained by integrating the amount of energy in the direction moving away from the above-mentioned start point location in the above-mentioned energy consumption graph, and a second integration value obtained by integrating the amount of energy in the direction approaching the above-mentioned start point location in the above-mentioned energy consumption graph, and based on a relationship between the sum of the above-mentioned first integration value and the above-mentioned second integration value, and a given specified amount of energy for each road node, decides a round-trip traveling range which is a range within which the above-mentioned vehicle is able to return to the above-mentioned start point location by using the above-mentioned specified amount of energy.

The disclosure makes it possible to accurately calculate a traveling range within which it is possible to return to a point of departure without replenishing energy along the way. In Patent Literature 2, a travel guidance system for a vehicle having a plurality of on-onboard batteries notifies the driver of the charging facility that makes it possible to complete round-trip travel from the charging facility to a destination and back to the charging facility with one of the on-board batteries, which is not left at the charging facility as a power supply source.
In Patent Literature 3, a navigation apparatus, a vehicle information display apparatus, and vehicle information display system which allow a user to find out the reachable range of an electric vehicle even when not on board of the electric vehicle.
In Patent Literature 4, a navigation apparatus renders possible to display in an easy and understandable manner to a user a minimum charge time required to travel to a destination.

The details of one or more implementations of the subject matter described in the specification are set forth in the accompanying drawings and the description below. Other features, aspects, and advantages of the subject matter will become apparent from the description, the drawings, and the claims.
Patent Literature 1: Japanese Patent Application Laid-open No. 2009-025128
Patent Literature 2: US 2010/106401 A1
Patent Literature 3: WO 2011/092729 A1
Patent Literature 4: US 2010/138098 A1
The invention is defined by the features of the independent claims 1 and 8. Preferred embodiments are defined in the dependent claims.

### BRIEF DESCRIPTION OF THE DRAWINGS

Fig. 1 is an example of a block diagram of a telematics system according to a first embodiment;
Fig. 2 is an example of a block diagram representing the basic functions of a server 10 according to the first embodiment;
Fig. 3 is an example of a block diagram representing the basic functions of a user information terminal 20 according to the first embodiment;
Fig. 4 is a drawing illustrating information stored in a storage part 11;
Fig. 5 is a flowchart illustrating the processing of the server 10 in the first embodiment;
Fig. 6 is a flowchart illustrating the processing of Step 102 in detail;
Fig. 7 is a flowchart illustrating the processing of Step 201 in detail;
Fig. 8 is a flowchart illustrating the processing of Step 202 in detail;
Fig. 9 is an example of a block diagram of a telematics system according to a second embodiment;
Fig. 10 is a drawing for explaining an example of a traveling range calculation;
Fig. 11 is a table illustrating map information for road links of link IDs 1 through 6 shown in Fig. 10;
Fig. 12 is a table illustrating an energy consumption graph 32 for the road links of link IDs 1 through 6 shown in Fig. 10;
Fig. 13 is a table illustrating traveling range data for a round-trip traveling range;
Fig. 14 is a drawing showing an example of a display of traveling ranges; and
Fig. 15 is an example of a block diagram of a car navigation apparatus according to a third embodiment.

### DESCRIPTION OF THE EMBODIMENT

### (First Embodiment)

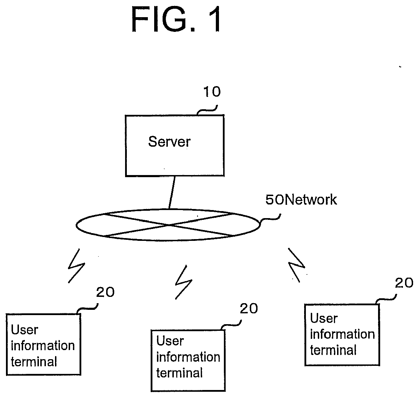

Fig. 1 shows a block diagram of a telematics system in accordance with a first embodiment. Referring to Fig. 1, the telematics system of the present embodiment comprises a server 10 and user information terminals 20, and the configuration is such that the server 10 and the user information terminals 20 are able to communicate via a network 50. The user information terminal 20 is a car navigation apparatus mounted in an electric vehicle, which travels by using energy stored in an electrical storage apparatus. However, the car navigation apparatus is one example of a user information terminal 20, but this terminal 20 may be another communication apparatus capable of being coupled to a network, such as a personal computer, a smartphone, and a tablet terminal. The server 10 comprises functions for calculating a range capable of being traveled by each electric vehicle (hereinafter referred to as "traveling range").

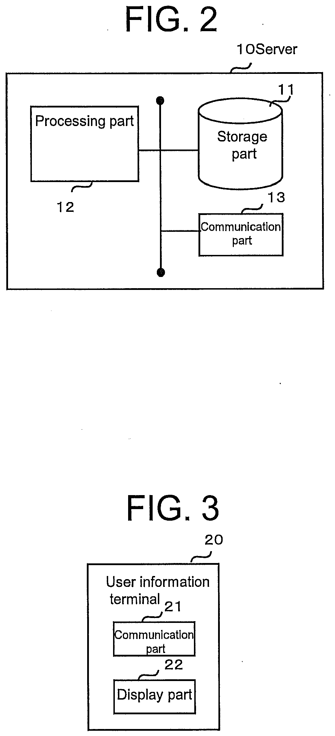

Fig. 2 is a block diagram representing the basic functions of the server 10 according to the first embodiment. Fig. 3 is a block diagram representing the basic functions of the user information terminal 20 according to the first embodiment.

Referring to Fig. 2, the server 10 comprises a storage part 11, a processing part 12, and a communication part 13.

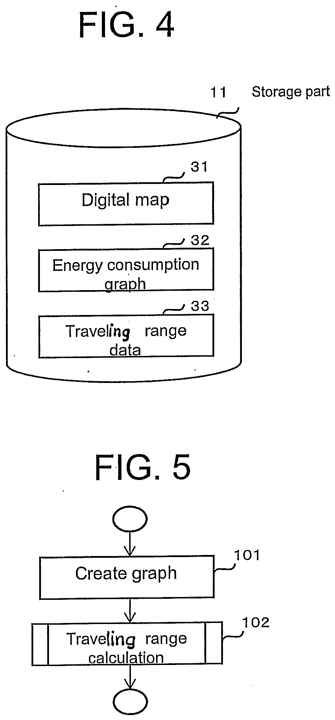

The storage part 11, as will be shown in Fig. 4, stores a digital map 31 and an energy consumption graph 32 beforehand, and stores traveling range data 33 showing a traveling range calculated by the processing part 12. The digital map 31 is map data expressed by using the road links to couple road nodes, and includes road shape and gradient information, and, in addition, associates traffic information for each road link. The energy consumption graph 32 shows the amount of energy consumed by a vehicle traveling in both directions along the road links on the digital map 31.

The processing part 12 calculates a range (hereinafter referred to as "round-trip traveling range") within which an electric vehicle is capable of traveling by using a given specified amount of energy by traveling so as to trace road links toward the perimeter from a specified start point location and once again returning to the start point location, and records this range in the storage part 11 as traveling range data 33. The start point location is not limited in any particular way, and, for example, may be a location specified by a user input, or may be a current location acquired via a GPS (Global Positioning System) mounted in the electric vehicle. The specified amount of energy is also not limited in any particular way, and, for example, may be a value specified by a user input, may be the actual remaining capacity of the electrical storage apparatus mounted in the electric vehicle, or may be an amount of electricity stored when the electrical storage apparatus of the electric vehicle is fully charged. Also, round-trip travel as used here does not refer only to a case where the same road link is traveled both going and returning, but rather also includes a case where different road links are travelled going and returning.

At this time, first of all the processing part 12 calculates a first integration value obtained by tracing a road link from a start point location peripherally and integrating the amount of energy consumed in the direction (hereinafter referred to as "forward direction") going away from the start point location in the energy consumption graph of the storage part 11 for each road node, and a second integration value obtained by integrating the amount of energy consumed in the direction (hereinafter referred to as "reverse direction") approaching the start point location in the energy consumption graph. Next, the processing part 12 decides the round-trip traveling range based on a relationship between the sum of the first integration value and the second integration value and a given specified amount of energy for each road node.

When tracing road links peripherally from the start point location, the processing part 12, for example, may perform a Dijkstra algorithm route search. A variety of search conditions can be set at this time. For example, in a case where a route search is performed by using time as a priority, the route search may be performed so as to minimize the required time as a score. In a case where distance is a priority, the distance may be used as the score, and in a case where energy consumption is a priority, the energy consumption may be used as the score. Furthermore, the processing part 12 may trace the road links by configuring different search conditions using a forward direction route search and a reverse direction route search. For example, the setting can be such that going has time as a priority and returning has energy consumption as a priority.

The communication part 3 communicates with the user information terminal 20 by way of the network 50. Information may be communicated from the user information terminal 20 to the server 10, for example, information such as the current location of the electric vehicle in which the user information terminal 20 is mounted, and the current remaining electrical storage capacity of the electrical storage apparatus. Information may also be communicated from the server 10 to the user information terminal 20, for example, information on the electric vehicle traveling range calculated by the processing part 12.

Referring to Fig. 3, the user information terminal 20 comprises a communication part 21 and a display part 22.

The communication part 21 communicates with the server 10 via wireless communications with the network 50. The communication part 21, for example, communicates information, such as the current location of the electric vehicle in which the user information terminal 20 is mounted and the current remaining electrical storage capacity of the electrical storage apparatus to the server 10, and, for example, communicates information on the electric vehicle traveling range calculated by the processing part 12 to the server 10.

The display part 22 displays information to be presented to the user via an image and text. The display part 22, for example, displays the round-trip traveling range of the electric vehicle on a map. This makes it possible for the user to visually learn the extent of the range on the map that the electric vehicle is able to travel round trip.

The user information terminal 20, in addition to the communication part 21 and the display part 22, may comprise an input part for receiving a user input, a location detection part for acquiring a current location, and a remaining battery amount detection part for detecting the remaining electrical storage capacity of the electrical storage apparatus mounted in the electric vehicle.

As described hereinabove, according to this embodiment, it is possible to calculate the energy consumption for an outbound trip by integrating the energy consumption of road links in the forward direction, to calculate the energy consumption for a return trip by integrating the energy consumption of road links in the reverse direction, and based on the sum thereof, to calculate the round-trip traveling range, thereby making it possible to accurately calculate a range within which it is possible to return to a point of departure without charging the electric vehicle along the way.

The processing of the processing part 12 will be explained more specifically.

The processing part 12 traces road links toward the perimeter from a start point location, and performs the calculation of the first integration value up to a road node where the first integration value becomes equal to or larger than a specified amount of energy. Next, the processing part 12 once again traces road links peripherally from the start point location, and this time performs the calculation of the second integration value up to the road node for which the first integration value was calculated. In addition, the processing part 12 calculates the total value of the first integration value and the second integration value for the road node for which the first integration value and the second integration value were calculated, and regards the range of the road node for which this total value is equal to or less than a specified amount of energy as the round-trip traveling range.

The processing part 12 additionally calculates a one-way traveling range, which is the traveling range that the electric vehicle can reach by using the specified amount of energy. At this time, the processing part 12 first selects all the road nodes for which the first integration value matches the specified amount of energy, or the road nodes immediately before the road nodes for which the first integration value exceeds the specified amount of energy. Next, the processing part 12 decides the range from the start point location up to the selected road node as the one-way traveling range. The process by which the processing part 12 calculates the first integration value is used for both the one-way traveling range calculation and the round-trip traveling range calculation, and the processing is executed efficiently overall.

Fig. 5 is a flowchart showing the processing of the server 10 in the first embodiment. The processing of the server 10 shown here is executed by the processing part 12.

Referring to Fig. 5, the server 10 creates an energy consumption graph 32 beforehand and stores this graph 32 in the storage part 11 (Step 101), and thereafter, calculates the traveling range of the electric vehicle in accordance with a request (Step 102).

In creating the energy consumption graph 32, the processing part 12 calculates the energy consumption when the electric vehicle is traveling in both directions along the road links based on the distances and elevation differences of the digital map 31, and records this energy consumption in the energy consumption graph 32. The energy consumption increases in accordance with the distance, and the energy consumption for each distance increases in the case of an uphill gradient and decreases in the case of a downhill gradient.

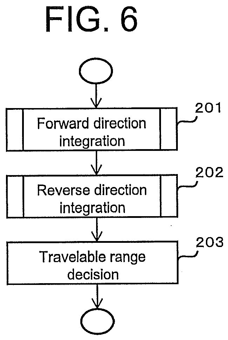

Fig. 6 is a flowchart showing the detailed processing of Step 102.

Referring to Fig. 6, the server 10 traces the road links toward the perimeter from the start point location, calculates the energy consumption in the forward direction, and calculates a first integration value to each road node (Step 201). The individual processes will be explained in detail further below.

Next, the server 10 likewise traces the road links peripherally from the start point location, calculates the energy consumption in the reverse direction, and calculates a second integration value to each road node (Step 202). This processing will also be explained in detail further below.

Then, the server 10 decides the round-trip traveling range and the one-way traveling range based on the first integration value and the second integration value (Step 203). At this time, the server 10 calculates the total value of the first integration value and the second integration value for each road node, and regards the range of the road node for which the total value is equal to or less than the specified amount of energy as the round-trip traveling range. Furthermore, the server 10 regards the range of the road node for which the first integration value is equal to or less than the specified amount of energy as the one-way traveling range.

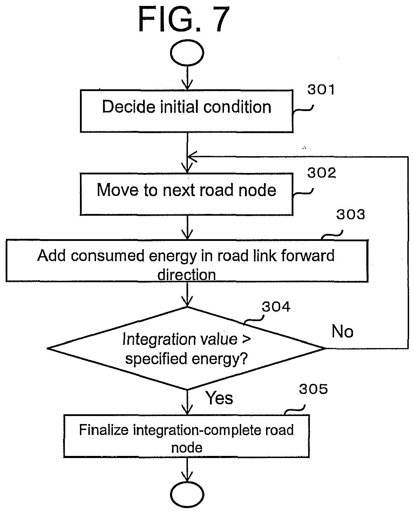

Fig. 7 is a flowchart showing the processing of Step 201 in detail.

Referring to Fig. 7, the server 10 configures an initial condition for calculating the first integration value (Step 301). The initial condition includes a start point location, which shows the location from which a search begins, and a search condition, such as whether priority is to be placed on distance or time. To facilitate processing, the road node closest to a specified location may be used as the start point location.

Next, the server 10 executes the Dijkstra algorithm on the basis of the search condition from the current road node, and advances to the next road node (Step 302), and adds to the first integration value the energy consumption in a case where the electric vehicle travels in the forward direction with respect to the road link that was taken, that is, the direction moving away from the start point location (Step 303).

Next, the server 10 determines whether or not the first integration value is equal to or larger than the specified amount of energy (Step 304). When the first integration value does not satisfy the specified amount of energy, the server 10 returns to Step 302 and repeats the Dijkstra algorithm. When the first integration value is equal to or larger than the specified amount of energy, the server 10 ends the integration process, and finalizes the road node for which integration has been completed (Step 305).

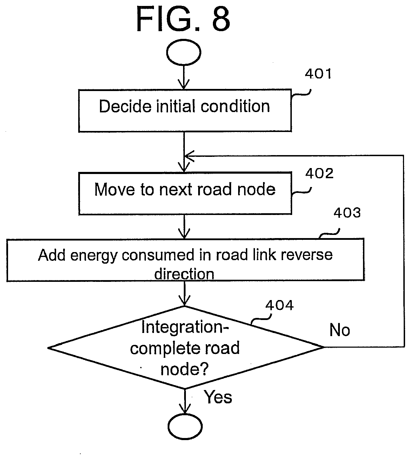

Fig. 8 is a flowchart showing the processing of Step 202 in detail.

Referring to Fig. 8, the server 10 configures an initial condition for calculating the second integration value (Step 401). The initial condition includes a start point location and a search condition. The start point location is the same location as when the first integration value was calculated, but the search condition does not necessarily have to be the same as when the first integration value was calculated.

Next, the server 10 executes the Dijkstra algorithm on the basis of the search condition from the current road node, and advances to the next road node (Step 402), and adds to the second integration value the energy consumption in a case where the electric vehicle travels in the reverse direction with respect to the road link that was taken, that is, the direction approaching the start point location (Step 403).

Next, the server 10 determines whether or not processing has reached the integration-complete road node, which was finalized in Step 305 (Step 404). In a case where the processing has not reached the integration-complete road node, the server 10 returns to Step 402 and repeats the Dijkstra algorithm. In a case where the processing has reached the integration-complete road node, the server 10 ends the processing.

### (Second Embodiment)

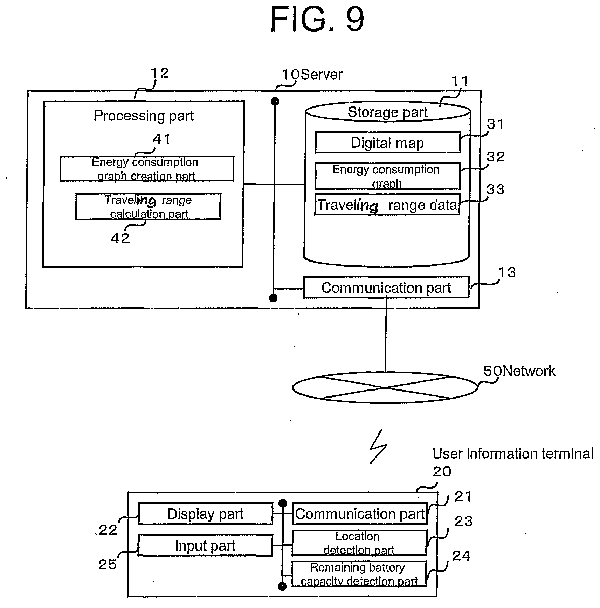

Fig. 9 is a block diagram of a telematics system according to a second embodiment. Referring to Fig. 9, the telematics system of this embodiment comprises a server 10 and the user information terminal 20, and the configuration is such that the server 10 and the user information terminal 20 can communicate via the network 50 the same as the first embodiment.

The user information terminal 20 comprises a communication part 21, a display part 22, a location detection part 23, a remaining battery amount detection part 24, and an input part 25, and is mounted in an electric vehicle, which travels by using energy stored in an electrical storage apparatus.

The server 10 is basically configured the same as that of the first embodiment, and comprises a storage part 11 and a processing part 12. The storage part 11 stores a digital map 31, an energy consumption graph 32, and traveling range data 33 the same as in Fig. 4. The processing part 12 comprises an energy consumption graph creation part 41 and a traveling range calculation part 42. The energy consumption graph creation part 41 executes the processing of Step 101 shown in Fig. 5, and the traveling range calculation part 42 executes the processing of Step 102. In the processing of Step 102, information on the current location of each electric vehicle and the remaining battery amount of the electrical storage apparatus is acquired from the user information terminal 20, and based on this information, a round-trip traveling range and a one-way traveling range is calculated for each electric vehicle. The method for calculating the round-trip traveling range and the one-way traveling range is basically the same as the method of the first embodiment.

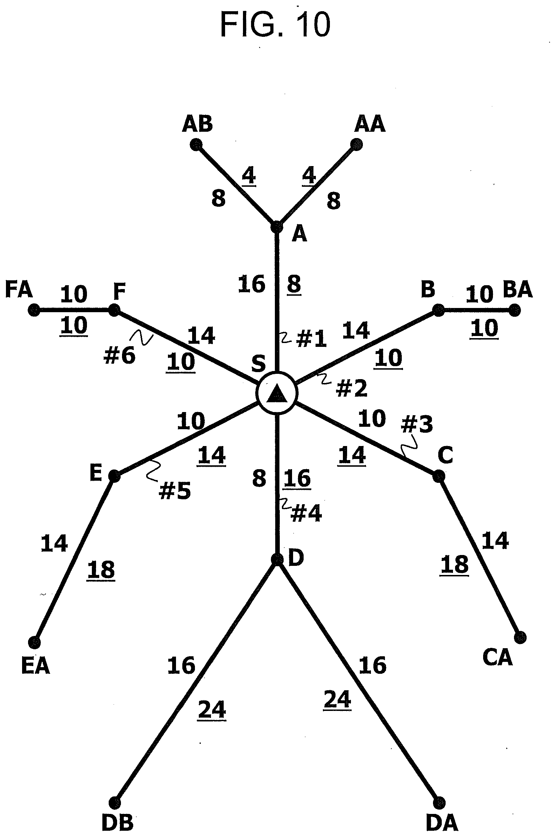

Fig. 10 is a drawing for explaining an example of a traveling range calculation.

A map of the area surrounding the current location of the electric vehicle is depicted in Fig. 10. The location indicated by a mark in which a black triangle is depicted inside a circle is the current location of the electric vehicle. The current location becomes the start point location in a traveling range calculation. A black dot mark represents a road node, and a solid line coupling road nodes represents a road link. A link ID is shown for a road link coupled to the start point location road node. The link ID is an identifier for uniquely identifying each road link.

The alphabet letters in the drawing are the node IDs of the respective road nodes. The numerals appended with a # sign in the drawing are the link IDs of the respective road links. The numerals written on both sides of a road link are the amounts of energy consumed by traveling along this road link. The unit used for energy consumption is kWh. A non-underlined numeral is the energy consumption in the forward direction, and an underlined numeral is the energy consumption in the reverse direction.

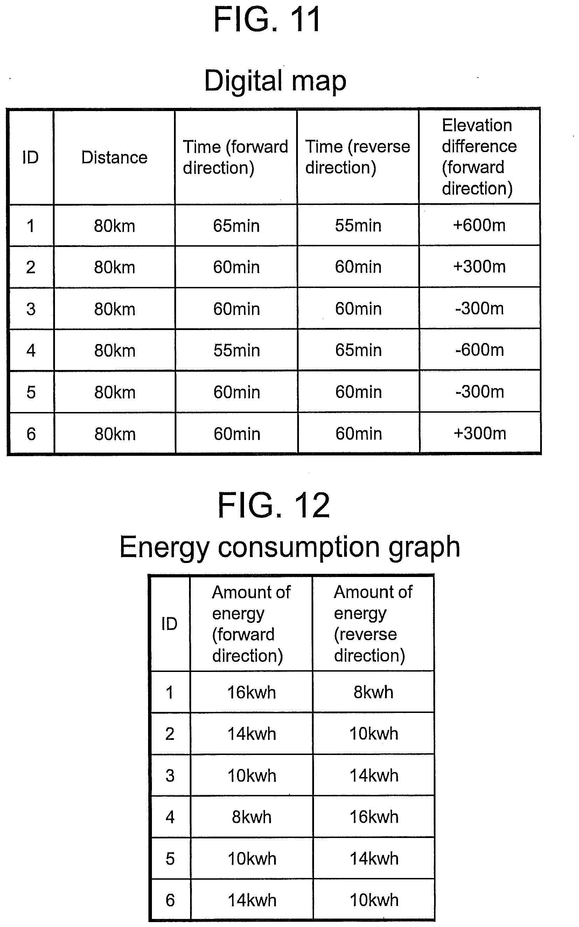

Fig. 11 is a table showing map information for the road links of link IDs 1 through 6 shown in Fig. 10. This map information is included in the digital map 31.

Referring to Fig. 11, the map information includes a distance, that is, a road length, times required to travel in the forward direction and the reverse direction, and an elevation difference based on the forward direction.

To expedite the explanation here, the required travel times and the elevation differences are described in accordance with the forward direction and the reverse direction, that is, directions based on the start point location (the same holds true for the drawings hereinbelow as well). However, this is not normally the case in an actual digital map 31.

In an actual digital map 31, for example, it is assumed that an absolute reference location is fixed, and that the required travel times and elevation differences are described for the direction moving away from the reference location (outbound direction) and the direction moving toward the reference location (inbound direction). However, the forward direction and the reverse direction, and the outbound direction and the inbound direction are easily converted mutually based on the positional relationships between the start point location and the reference location.

Fig. 12 is a table showing an energy consumption graph 32 for the road links of the link IDs 1 through 6 shown in Fig. 10. The amount of energy consumed by traveling in the forward direction, and the amount of energy consumed by traveling in the reverse direction are described for each road link in the energy consumption graph 32. The same as in the case of Fig. 11, in an actual energy consumption graph 32, it is assumed that the amount of energy consumed will be described with respect to the outbound direction and the inbound direction rather than the forward direction and the reverse direction.

Looking at Figs. 10 through 12 collectively, a road link for which the elevation difference in the forward direction is a positive value indicates that the electric vehicle is traveling uphill, and as such, the amount of energy consumed in the forward direction will be a larger value than the amount of energy consumed by traveling in the reverse direction. A road link for which the elevation difference in the forward direction is a negative value is the opposite thereof.

An example of calculating a round-trip traveling range and a one-way traveling range from a start point location on a shape and gradient map such as shown in Figs. 10 through 12 will be explained. It is supposed here that the current remaining electrical storage capacity of the electrical storage apparatus of the electric vehicle is 24 kWh. This 24-kWh remaining electrical storage capacity becomes the specified amount of energy in the traveling range calculation.

The server 10 traces road links from the road node S of the start point location, and integrates the amount of energy consumed in the forward direction. For example, upon tracing the road links from the road node S to road node A and then to road node AB, the integration value (first integration value) of the energy consumption in the forward direction is 24 kWh, which is equivalent to the specified amount of energy. Thus, the server 10 ends the integration of the first integration value for this route at the road node AB. Similarly, for example, upon tracing the road links from the road node S to the road node A and then on to road node AA, the first integration value is 24 kWh, and as such, the server 10 ends the integration of the first integration value for this route at the road node AA. Similarly, when the integration of the first integration value has been performed for all directions surrounding the start point location, the integration of the first integration values for the respective routes with respect to the road nodes AB, AA, BA, CA, DA, DB, EA, and FA ends. The range from the start point location to the road nodes AB, AA, BA, CA, DA, DB, EA, and FA becomes the one-way traveling range.

Next, the server 10 once again traces the road links from the road node S at the start point location up to the road node for which the integration of the first integration value has been completed, and this time integrates the amount of energy consumed in the reverse direction to calculate a second integration value to each road node.

Next, the server 10 calculates a total value of the first integration value and the second integration value for each road node for which the first integration value and the second integration value has been calculated, and selects a road node for which the total value is equal to or less than the specified amount of energy of 24 kWh. Here, for example, for the road node A, since the first integration value is 16 kWh and the second integration value is 8 kWh, the total value is 24 kWh. When the processing is performed in the same way, the road nodes A, B, C, D, E, and F are selected. Next, the server 10 regards the range from the road node S at the start point location to these selected road nodes A, B, C, D, E, and F as the round-trip traveling range.

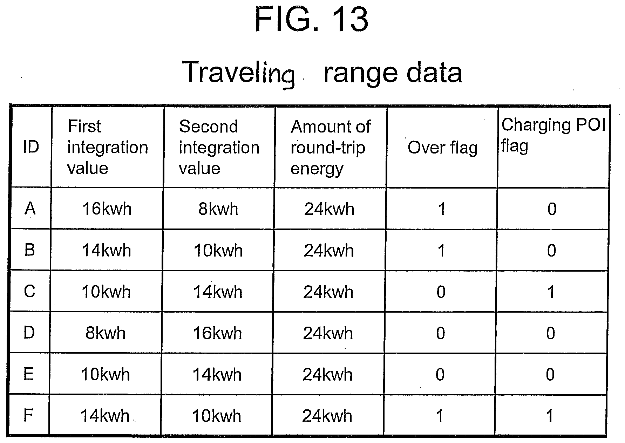

Fig. 13 is a table showing traveling range data for a round-trip traveling range. Referring to Fig. 13, first integration values and second integration values are shown for road nodes A, B, C, D, E, and F, and a round-trip amount of energy, which is the total value thereof, is shown.

In this embodiment, the server 10 (specifically, the processing part 12) distinguishes between the road nodes within the round-trip traveling range as being a first round-trippable road node for which the first integration value is larger than one half of the specified amount of energy, and a second round-trippable road node for which the first integration value is equal to or less than one half of the specified amount of energy. Here, the road nodes A, B and F are the first round-trippable road nodes, and the road nodes C, D, and E are the second round-trippable road nodes. Then, the server 10 adds an over flag to the first round-trippable road nodes. Referring to Fig. 13, an over flag is added to the first round-trippable road nodes A, B, and F. This makes it possible to present the user with information as to whether or not the amount of energy consumed in order to travel that far is more than one half of the specified amount of energy (for example, the remaining electrical storage capacity at the time of departure) for each road node for which round-trip travel is possible.

In the server 10 of this embodiment, the storage part 11, for example, also stores in the digital map 31 a location on the map where there exists a charging facility at which the electric vehicle can be charged, and the processing part 12 determines, for each outermost road node in the round-trip traveling range, whether or not there is a charging facility within a predetermined distance from this road node. Then, the server 10 adds a charging POI flag to a road node for which there is a charging facility (charging POI) within the predetermined distance. Referring to Fig. 13, a charging POI flag is added to road nodes C and F. This makes it possible to present the user with information as to whether or not there is a charging facility in the outermost vicinity of the range within which round-trip travel is possible.

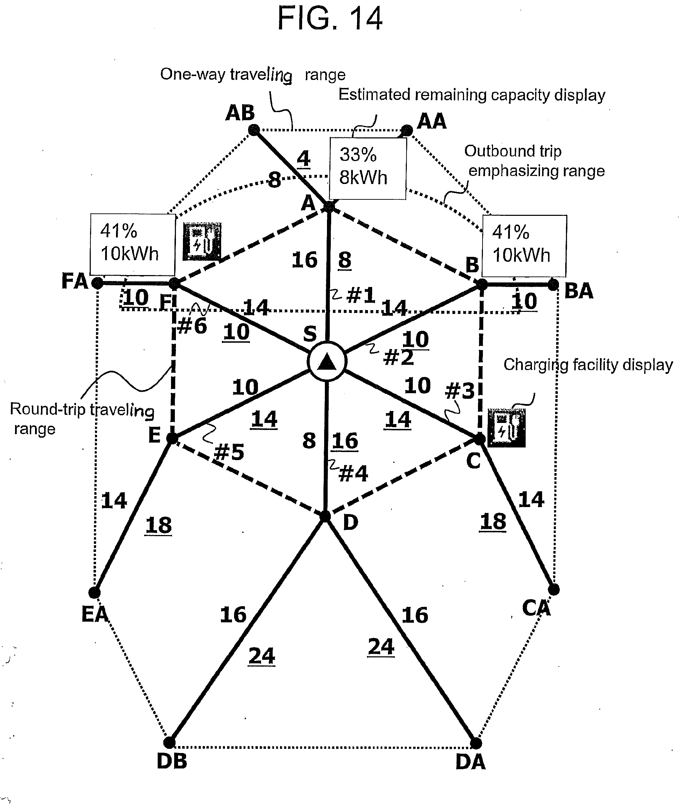

Fig. 14 is a drawing showing an example of a display of traveling ranges.

Referring to Fig. 14, the traveling ranges are superposably displayed on the map shown in Fig. 10. The range enclosed within the dashed line is the round-trip traveling range, and the range enclosed within the dotted line is the one-way traveling range. A percentage of the specified amount of energy estimated to be the remaining battery amount upon reaching a road node and a remaining capacity value are displayed in the vicinity of the road nodes for which the first integration value is larger than one half of the specified amount of energy from among the road nodes within the round-trip traveling range.

Charging facility displays are displayed in the vicinity of the road nodes C and F, where charging facilities exist within a predetermined distance of the road nodes at the outer edge of the round-trip traveling range.

### (Third Embodiment)

In the first and second embodiments, the server 10 calculates a traveling range and notifies the user information terminal 20, and the user information terminal 20 displays the traveling range. As other examples, a personal computer, a car navigation apparatus, a smart phone or other such user information terminal itself may calculate and display the traveling range. An example in which a car navigation apparatus calculates and displays a traveling range on its own is shown as a third embodiment.

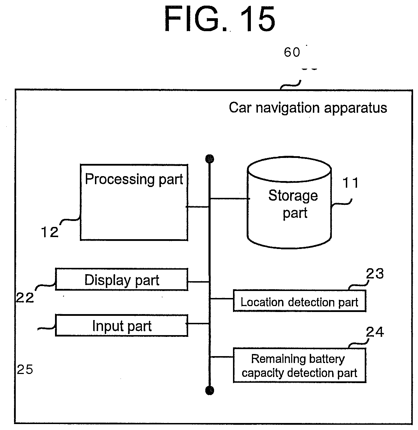

Fig. 15 is a block diagram of a car navigation apparatus according to the third embodiment. This embodiment is such that, rather than a server calculating the traveling range as in the first and second embodiments, a car navigation apparatus mounted in the electric vehicle calculates the traveling range.

The car navigation apparatus 60 calculates the traveling range on its own based on a current location and a remaining electrical storage capacity, which it has acquired on its own.

Referring to Fig. 15, the car navigation apparatus 60 comprises a storage part 11, a processing part 12, a display part 22, a location detection part 23, a remaining battery amount detection part 24, and an input part 25.

The storage part 11, the processing part 12, the display part 22, the location detection part 23, the remaining battery amount detection part 24, and the input part 25 are the same as those shown in Fig. 9.

Although the present disclosure has been described with reference to example embodiments, those skilled in the art will recognize that various changes and modifications may be made in form and detail without departing from the scope of the claimed subject matter.

The server 10 or the car navigation apparatus 60 of the respective embodiments described hereinabove can also be realized in accordance with having a computer execute a software program, which specifies the processing steps performed by the processing part 12.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A traveling range calculation apparatus for calculating a range of a vehicle that travels by using stored energy, comprising:
a storage part (11) for storing beforehand, as an energy consumption graph (32), amounts of energy consumed by a vehicle traveling in both directions along road links on a map (31) rendered in a manner that road links couple road nodes (A-F); and
a processing part(12), which traces a road link from a specified start point location peripherally, calculates, for each road node (A-F), a first integration value obtained by integrating amounts of energy in a direction moving away from the start point location on the energy consumption graph (32) and a second integration value obtained by integrating amounts of energy in a direction moving toward the start point location on the energy consumption graph (32), and based on a relationship between the sum of the first integration value and the second integration value and a given specified amount of energy for each road node (A-F), decides a round-trip traveling range which is a range within which the vehicle-is able to return to the start point location by using the specified amount of energy, **characterised in that** the processing part (12)
additionally regards a range to the road node (A-F) for which the first integration value matches the specified amount of energy or to a road node (A-F) immediately before the road node (A-F) for which the first integration value exceeds the specified amount of energy, as a one-way traveling range which is a range capable of being reached by using the specified amount of energy.

2. A traveling range calculation apparatus according to claim 1, wherein the processing part (12) calculates the first integration value by tracing the road link from the start point location peripherally up to a road node (A-F) for which the first integration value matches to or exceeds the specified amount of energy, calculates the second integration value by tracing the road link from the start point location peripherally up to the road node (A-F) for which the first integration value has been calculated, calculates the sum of the first integration value and the second integration value for a road node (A-F) for which the first integration value and the second integration value have been calculated, and regards a range of a road node (A-F) for which the sum is equal to or less than the specified amount of energy as the round-trip traveling range.

3. A traveling range calculation apparatus according to any one of claims 1 to 3, wherein the processing part (12) traces the road link in accordance with a predetermined search condition by using the Dijkstra algorithm.

4. A traveling range calculation apparatus according to claim 4, wherein the processing part (12) is able to trace the road link by using a different search condition when calculating the first integration value and when calculating the second integration value.

5. A traveling range calculation apparatus according to any one of claims 1 to 5, wherein the processing part (12) distinguishes between road nodes (A-F) within the round-trip traveling range as being a first round-trippable road node (A-F) for which the first integration value is larger than one half of the specified amount of energy, and a second round-trippable road node (A-F) for which the first integration value is equal to or less than one half of the specified amount of energy.

6. A traveling range calculation apparatus according to any one of claims 1 to 6, wherein the storage part (11) further stores a map (31) location where a charging facility exists, and
the processing part (12) determines, for each outermost road node (A-F) in the round-trip traveling range, whether or not there is a charging facility within a predetermined distance from this road node (A-F).

7. A traveling range calculation apparatus according to any one of claims 1 to 7, further comprising a display part (22) for displaying information including the round-trip traveling range on the map (31) .

8. A traveling range calculation method for calculating a range of a vehicle that travels by using stored energy, comprising:
recording beforehand, as an energy consumption graph (32), amounts of energy consumed by a vehicle traveling in both directions along road links on a map rendered in a manner that road links couple road nodes (A-F);
tracing a road link from a specified start point location peripherally and calculating, for each road node (A-F), a first integration value obtained by integrating amounts of energy in a direction moving away from the start point location on the energy consumption graph (32) and a second integration value obtained by integrating amounts of energy in a direction moving toward the start point location on the energy consumption graph (32); and
deciding, based on a relationship between the sum of the first integration value and the second integration value and a given specified amount of energy for each road node (A-F), a round-trip traveling range which is a range within which the vehicle is able to return to the start point location by using the specified amount of energy, **characterised in that** deciding
additionally regards a range to the road node (A-F) for which the first integration value matches the specified amount of energy or to a road node (A-F) immediately before the road node (A-F) for which the first integration value exceeds the specified amount of energy, as a one-way traveling range which is a range capable of being reached by using the specified amount of energy.

9. A traveling range calculation program comprising instructions which, when the program is executed by a computer, cause the computer to carry out the steps of the method of claim 8.

## Patentansprüche

1. Fahrreichweiten-Berechnungsvorrichtung zum Berechnen einer Reichweite eines Fahrzeugs, das unter Verwendung gespeicherter Energie fährt, die Folgendes umfasst:
einen Speicherabschnitt (11) zum vorherigen Speichern als einen Energieverbrauchsgraphen (32) von Energiemengen, die von einem Fahrzeug verbraucht werden, das in beiden Richtungen längs Straßenverbindungen auf einer Karte (31) fährt, die so aufbereitet sind, dass Straßenverbindungen Straßenknoten (A-F) koppeln; und
einen Verarbeitungsabschnitt (12), der eine Straßenverbindung von einem bestimmten Startpunkt-Ort auswärts verfolgt, für jeden Straßenknoten (A-F) einen ersten Integrationswert, der durch Integrieren von Energiebeträgen in einer Richtung ausgehend von dem Startpunkt-Ort auf dem Energieverbrauchsgraphen (32) erhalten wird, und einen zweiten Integrationswert, der durch Integrieren von Energiemengen einwärts zu dem Startpunkt-Ort auf dem Energieverbrauchsgraphen (32) erhalten wird, berechnet und anhand einer Beziehung zwischen der Summe des ersten Integrationswertes und des zweiten Integrationswertes und einer gegebenen bestimmten Energiemenge für jeden Straßenknoten (A-F) eine Hin- und Rückfahrt-Reichweite festlegt, die eine Reichweite ist, innerhalb derer das Fahrzeug unter Nutzung der bestimmten Energiemenge zum Startpunkt-Ort zurückkehren kann,
**dadurch gekennzeichnet, dass**
der Verarbeitungsabschnitt (12) zusätzlich eine Reichweite zu dem Straßenknoten (A-F), für den der erste Integrationswert mit der bestimmten Energiemenge übereinstimmt, oder zu einem Straßenknoten (A-F), der unmittelbar vor dem Straßenknoten (A-F) liegt, für den der erste Integrationswert die bestimmte Energiemenge überschreitet, als eine Hinfahrt-Reichweite betrachtet, die eine Reichweite ist, die unter Verwendung der bestimmten Energiemenge erreicht werden kann.

2. Fahrreichweiten-Berechnungsvorrichtung nach Anspruch 1, wobei der Verarbeitungsabschnitt (12) den ersten Integrationswert durch Verfolgen der Straßenverbindung von dem Startpunkt-Ort auswärts bis zu einem Straßenknoten (A-F), für den der erste Integrationswert mit der bestimmten Energiemenge übereinstimmt oder diese überschreitet, berechnet, den zweiten Integrationswert durch Verfolgen der Straßenverbindung von dem Startpunktort auswärts bis zu dem Straßenknoten (A-F), für den der erste Integrationswert berechnet worden ist, berechnet, die Summe des ersten Integrationswerts und des zweiten Integrationswerts für einen Straßenknoten (A-F), für den der erste Integrationswert und der zweite Integrationswert berechnet worden sind, berechnet und einen Bereich eines Straßenknotens (A-F), für den die Summe gleich oder kleiner als die bestimmte Energiemenge ist, als eine Hin- und Rückfahrt-Reichweite betrachtet.

3. Fahrreichweiten-Berechnungsvorrichtung nach einem der Ansprüche 1 bis 3, wobei der Verarbeitungsabschnitt (12) die Straßenverbindung in Übereinstimmung mit einer vorgegebenen Suchbedingung unter Verwendung des Dijkstra-Algorithmus verfolgt.

4. Fahrreichweiten-Berechnungsvorrichtung nach Anspruch 4, wobei der Verarbeitungsabschnitt (12) die Straßenverbindung unter Verwendung verschiedener Suchbedingungen, wenn der erste Integrationswert berechnet wird und wenn der zweite Integrationswert berechnet wird, verfolgen kann.

5. Fahrreichweiten-Berechnungsvorrichtung nach einem der Ansprüche 1 bis 5, wobei der Verarbeitungsabschnitt (12) bei Straßenknoten (A-F) innerhalb der Hin- und Rückfahrt-Reichweite zwischen einem ersten für die Hin- und Rückfahrt geeigneten Straßenknoten (A-F), für den der erste Integrationswert größer als die Hälfte der bestimmten Energiemenge ist, und einem zweiten für die Hin- und Rückfahrt geeigneten Straßenknoten (A-F), für den der erste Integrationswert kleiner oder gleich der Hälfte der bestimmten Energiemenge ist, unterscheidet.

6. Fahrreichweiten-Berechnungsvorrichtung nach einem der Ansprüche 1 bis 6, wobei der Speicherabschnitt (11) einen Kartenort (31) speichert, an dem eine Ladeeinrichtung vorhanden ist und
der Verarbeitungsabschnitt (12) für jeden äußersten Straßenknoten (A-F) in der für die Hin- und Rückfahrt geeigneten Fahrreichweite bestimmt, ob in dem vorgegebenen Abstand von diesem Straßenknoten (A-F) eine Ladeeinrichtung vorhanden ist.

7. Fahrreichweiten-Berechnungsvorrichtung nach einem der Ansprüche 1 bis 7, die ferner einen Anzeigeabschnitt (22) zum Anzeigen von Informationen, die die Hin- und Rückfahrt-Reichweite auf der Karte (31) enthalten, umfasst.

8. Fahrreichweiten-Berechnungsverfahren zum Berechnen einer Reichweite eines Fahrzeugs, das unter Verwendung gespeicherter Energie fährt, das Folgendes umfasst:
im Voraus Aufzeichnen als einen Energieverbrauchsgraphen (32) von Energiemengen, die von einem Fahrzeug verbraucht werden, das in beiden Richtungen längs Straßenverbindungen auf einer Karte fährt, die in der Weise aufbereitet ist, dass Straßenverbindungen Straßenknoten (A-F) koppeln;
Verfolgen einer Straßenverbindung ausgehend von einem bestimmten Startpunkt-Ort auswärts und Berechnen für jeden Straßenknoten (A-F) eines ersten Integrationswerts, der durch Integrieren von Energiemengen in einer Richtung ausgehend von dem Startpunkt-Ort auf dem Energieverbrauchsgraphen (32) erhalten wird, und eines zweiten Integrationswerts, der durch Integrieren von Energiemengen in einer Richtung zu dem Startpunkt-Ort auf dem Energieverbrauchsgraphen (32) erhalten wird; und
Festlegen anhand einer Beziehung zwischen der Summe des ersten Integrationswertes und des zweiten Integrationswertes und einer gegebenen bestimmten Energiemenge für jeden Straßenknoten (A-F) einer Hin- und Rückfahrt-Reichweite, die eine Reichweite ist, innerhalb derer das Fahrzeug unter Nutzung der bestimmten Energiemenge zum Startpunkt-Ort zurückkehren kann,
**dadurch gekennzeichnet, dass**
das Festlegen zusätzlich eine Reichweite zu dem Straßenknoten (A-F), für den der erste Integrationswert mit der bestimmten Energiemenge übereinstimmt, oder zu einem Straßenknoten (A-F), der sich unmittelbar vor dem Straßenknoten (A-F) befindet, für den der erste Integrationswert die bestimmte Energiemenge überschreitet, als eine Hinfahrt-Reichweite betrachtet, die eine Reichweite ist, die unter Verwendung der bestimmten Energiemenge erreicht werden kann.

9. Fahrreichweiten-Berechnungsprogramm, das Befehle enthält, die dann, wenn das Programm von einem Computer ausgeführt wird, den Computer dazu veranlassen, die Schritte des Verfahrens nach Anspruch 8 auszuführen.

## Revendications

1. Appareil de calcul d'autonomie de déplacement pour calculer une autonomie d'un véhicule qui se déplace en utilisant de l'énergie stockée, comprenant :
une partie de stockage (11) destinée à stocker au préalable, à titre de graphique de consommation d'énergie (32), des quantités d'énergie consommées par un véhicule qui circule dans les deux directions le long de liaisons routières sur une carte (31) restituée d'une manière telle que les liaisons routières couplent des noeuds routiers (A-F) ; et
une partie de traitement (12), qui trace une liaison routière depuis un emplacement de point de départ spécifié de manière périphérique, qui calcule, pour chaque noeud routier (A-F), une première valeur d'intégration obtenue en intégrant des quantités d'énergie dans une direction en se déplaçant en éloignement de l'emplacement du point de départ sur le graphique de consommation d'énergie (32) et une seconde valeur d'intégration obtenue en intégrant des quantités d'énergie dans une direction en se déplaçant en rapprochement de l'emplacement du point de départ sur le graphique de consommation d'énergie (32) et, en se basant sur une relation entre la somme de la première valeur d'intégration et de la seconde valeur d'intégration et une quantité d'énergie spécifiée donnée pour chaque noeud routier (A-F), qui décide une autonomie de déplacement pour un voyage en circuit fermé qui est une autonomie à l'intérieur de laquelle le véhicule est capable de retourner à l'emplacement du point de départ en utilisant la quantité d'énergie spécifiée,
**caractérisé en ce que** la partie de traitement (12) considère additionnellement une autonomie vers le noeud routier (A-F) pour lequel la première valeur d'intégration s'accorde à la quantité spécifiée d'énergie ouverte à un noeud routier (A-F) immédiatement avant le noeud routier (A-F) pour lequel la première valeur d'intégration excède la quantité d'énergie spécifiée, à titre d'autonomie de déplacement en sens unique qui est une autonomie capable d'être atteinte en utilisant la quantité d'énergie spécifiée.

2. Appareil de calcul d'autonomie de déplacement selon la revendication 1, dans lequel la partie de traitement (12) calcule la première valeur d'intégration en traçant la liaison routière depuis l'emplacement du point de départ de manière périphérique jusqu'à un noeud routier (AF) pour lequel la première valeur d'intégration s'accorde à ou excède la quantité spécifiée d'énergie, calcule la seconde valeur d'intégration en traçant la liaison routière depuis l'emplacement du point de départ de manière périphérique jusqu'au noeud routier (A-F) pour lequel la première valeur d'intégration a été calculée, calcule la somme de la première valeur d'intégration et de la seconde valeur d'intégration pour un noeud routier (A-F) pour lequel la première valeur d'intégration et la seconde valeur d'intégration ont été calculées, et considère une autonomie d'un noeud routier (A-F) pour lequel la somme est égale ou inférieure à la quantité d'énergie spécifiée comme étant l'autonomie de déplacement pour un voyage en circuit fermé.

3. Appareil de calcul d'autonomie de déplacement selon l'une quelconque des revendications 1 et 2, dans lequel la partie de traitement (12) trace la liaison routière en accord avec une condition de recherche prédéterminée en utilisant l'algorithme de Dijkstra.

4. Appareil de calcul d'autonomie de déplacement selon la revendication 3, dans lequel la partie de traitement (12) est capable de tracer la liaison routière en utilisant une condition de recherche différente lorsqu'elle calcule la première valeur d'intégration et lorsqu'elle calcule la seconde valeur d'intégration.

5. Appareil de calcul d'autonomie de déplacement selon l'une quelconque des revendications 1 à 4, dans lequel la partie de traitement (12) fait une distinction entre des noeuds routiers (A-F) à l'intérieur de l'autonomie de déplacement pour un voyage en circuit fermé comme étant un premier noeud routier (A-F) convenable pour un voyage en circuit fermé, pour lequel la première valeur d'intégration est supérieure à une moitié de la quantité d'énergie spécifiée, et un second noeud routier (A-F) convenable pour un voyage en circuit fermé, pour lequel la première valeur d'intégration est égale ou inférieure à une moitié de la quantité d'énergie spécifiée.

6. Appareil de calcul d'autonomie de déplacement selon l'une quelconque des revendications 1 à 5, dans lequel la partie de stockage (11) stocke en outre un emplacement de carte (31) où il existe une installation de charge, et
la partie de traitement (12) détermine, pour chaque noeud routier (A-F) tout à fait extérieur dans l'autonomie de déplacement pour un voyage en circuit fermé, s'il existe ou non une installation de charge à l'intérieur d'une distance prédéterminée depuis ce noeud routier (A-F).

7. Appareil de calcul d'autonomie de déplacement selon l'une quelconque des revendications 1 à 6, comprenant en outre une partie d'affichage (22) pour afficher une information incluant l'autonomie de déplacement pour un voyage en circuit fermé sur la carte (31).

8. Procédé de calcul d'autonomie de déplacement pour calculer une autonomie d'un véhicule qui se déplace en utilisant de l'énergie stockée, comprenant les étapes consistant à :
enregistrer au préalable, à titre de graphique de consommation d'énergie (32), des quantités d'énergie consommées par un véhicule qui se déplace dans les deux directions le long de liaisons routières sur une carte restituée d'une manière telle que les liaisons routières couplent des noeuds routiers (A-F) ;
tracer une liaison routière depuis un emplacement de point de départ spécifié de manière périphérique et calculer, pour chaque noeud routier (A-F), une première valeur d'intégration obtenue en intégrant des quantités d'énergie dans une direction en se déplaçant en éloignement de l'emplacement du point de départ sur le graphique de consommation d'énergie (32) et une seconde valeur d'intégration obtenue en intégrant des quantités d'énergie dans une direction en se déplaçant en direction de l'emplacement du point de départ sur le graphique de consommation d'énergie (32) ; et
décider, sur la base d'une relation entre la somme de la première valeur d'intégration et de la seconde valeur d'intégration et une quantité spécifiée donnée d'énergie pour chaque noeud routier (A-F), une autonomie de déplacement pour un voyage en circuit fermé qui est une autonomie à l'intérieur de laquelle le véhicule est capable de retourner à l'emplacement du point de départ en utilisant la quantité d'énergie spécifiée,
**caractérisé par** une étape additionnelle consistant à décider quant à une autonomie vers le noeud routier (A-F) pour lequel la première valeur d'intégration s'accorde à la quantité d'énergie spécifiée ou vers un noeud routier (A-F) immédiatement avant le noeud routier (A-F) pour lequel la première valeur d'intégration excède la quantité d'énergie spécifiée, comme étant une autonomie de déplacement pour un voyage en sens unique, qui est une autonomie capable d'être atteinte en utilisant la quantité d'énergie spécifiée.

9. Programme de calcul d'autonomie de déplacement comprenant des instructions qui, quand le programme est exécuté par un ordinateur, amènent l'ordinateur à exécuter les étapes du procédé de la revendication 8.
